(19) Europäisches Patentamt
European Patent Office
Office européen des brevets

(11) **EP 4 742 821 A1**

(12) **EUROPEAN PATENT APPLICATION**
published in accordance with Art. 153(4) EPC

(43) Date of publication:
**13.05.2026 Bulletin 2026/20**

(21) Application number: **23944071.2**

(22) Date of filing: **06.07.2023**

(51) International Patent Classification (IPC):
**H04W 76/28** (2018.01)　　**H04W 72/04** (2023.01)

(52) Cooperative Patent Classification (CPC):
**H04W 76/28; H04W 52/02; H04W 64/00;
H04W 68/02; H04W 72/04; H04W 76/27;
Y02D 30/70**

(86) International application number:
**PCT/CN2023/106120**

(87) International publication number:
**WO 2025/007344 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd
Shanghai 201601 (CN)**

(72) Inventors:
- **ZHAO, Zheng
  Shanghai 201601 (CN)**
- **LYU, Ling
  Shanghai 201601 (CN)**
- **YANG, Zhongzhi
  Shanghai 201601 (CN)**

(74) Representative: **Fish & Richardson P.C.
Highlight Business Towers
Mies-van-der-Rohe-Straße 8
80807 München (DE)**

(54) **WIRELESS COMMUNICATION METHOD AND COMMUNICATION DEVICE**

(57)　　Provided are a wireless communication method and a communication device. A wireless communication method includes determining, by a first communication device, second information based on first information; and/ or, determining, by a first communication device, first information based on second information, where the first information is related to at least one of a time window for sending a first signal and a time window for measuring a first signal, the second information is related to at least one of a discontinuous reception (DRX) parameter and a paging parameter of a terminal device, and the first signal is configured for positioning of the terminal device. The DRX process and paging process also involve wake-up procedures. The present disclosure proposes combining the first information and the second information to select one or more of the following: a time window for measuring and/or sending the first signal, A DRX parameter, and a paging parameter, so as to minimize the total number of wake-ups, thereby reducing energy consumption of the terminal device.

FIG. 4

## Description

### TECHNICAL FIELD

The present disclosure relates to the technical field of communications, and more particularly, to a wireless communication method and a communication device.

### BACKGROUND

In a positioning procedure, a terminal device is required to send and/or measure a first signal used for positioning. Consequently, the terminal device must wake up from a sleep state. This wake-up process necessitates the terminal device to perform operations such as measurement and synchronization, thereby resulting in relatively large power consumption by the terminal device.

### SUMMARY

Embodiments of the present disclosure provide a wireless communication method and a communication device. Various aspects of the present disclosure are described below.

In a first aspect, a wireless communication method is provided. The wireless communication method includes at least one of: determining, by a first communication device, second information based on first information; or determining, by a first communication device, the first information based on the second information. The first information is related to at least one of a time window for sending a first signal or a time window for measuring the first signal, the second information is related to at least one of a discontinuous reception (DRX) parameter or a paging parameter of a terminal device, and the first signal is configured for positioning the terminal device.

In a second aspect, a wireless communication method is provided. The wireless communication method includes: sending, by a second communication device, indication information to a first communication device, the indication information including at least one of first indication information or second indication information. In the case where the first indication information indicates first information, or when the first information indicates second information, and when the first indicates the second information, the second information is configured to determine the first information. The first information is related to at least one of a time window for sending a first signal and a time window for measuring a first signal, the second information is related to at least one of a discontinuous reception (DRX) parameter and a paging parameter of a terminal device, the first signal is configured for positioning the terminal device, the second indication information is configured to indicate a radio resource control (RRC) state of the terminal device, and in the case where the first information is determined based on the second information, the RRC state and an identifier of the terminal device are configured to determine the second information.

In a third aspect, a communication device is provided. The communication device is a first communication device and includes at least one of: a first determination unit, configured to determine second information based on first information; and a second determination unit, configured to determine first information based on second information. The first information is related to at least one of a time window for sending a first signal and a time window for measuring a first signal, the second information is related to at least one of a discontinuous reception (DRX) parameter and a paging parameter of a terminal device, and the first signal is configured for positioning the terminal device.

In a fourth aspect, a communication device is provided. The communication device is a second communication device and includes: a sending unit, configured to send indication information to a first communication device, the indication information including at least one of first indication information and second indication information. In the case where the first indication information is configured to indicate first information, the first information is configured to determine second information, and in the case where the first indication information is configured to determine the second information, the second information is configured to determine the first information. The first information is related to at least one of a time window for sending a first signal and a time window for measuring a first signal, the second information is related to at least one of a discontinuous reception (DRX) parameter and a paging parameter of a terminal device, the first signal is configured for positioning the terminal device, the second indication information is configured to indicate a radio resource control (RRC) state of the terminal device, and in the case where the first information is determined based on the second information, the RRC state and an identifier of the terminal device are configured to determine the second information.

In a fifth aspect, a communication device is provided. The communication device includes: a memory and a processor, where the memory is configured to store a program, and the processor is configured to call the program stored in the memory to cause the communication device to perform part or all of the operations in the wireless communication method according to the first aspect and/or the second aspect.

In a sixth aspect, embodiments of the present disclosure provide a communication system, which includes the aforementioned communication device. In another possible design, the system may further include other devices interacting with the communication device in the solutions provided by the embodiments of the present disclosure.

In a seventh aspect, the embodiments of the present disclosure provide a computer-readable storage medium storing a computer program. The computer program causes a communication device to perform part or all of the operations in the methods described in the foregoing aspects.

In an eighth aspect, the embodiments of the present disclosure provide s a computer program product, which includes a non-transitory computer-readable storage medium storing a computer program. The computer program is operable to cause a communication device to perform part or all of the operations in the methods described in the foregoing aspects. In some implementations, the computer program product may be a software installation package.

In a ninth aspect, the embodiments of the present disclosure provide a chip including a memory and a processor. The processor is configured to invoke and execute the computer program from the memory to implement part or all of the operations described in the methods of the foregoing aspects.

The DRX process and paging process also involve wake-up procedures. The present disclosure proposes combining the first information and the second information to select one or more of the following: a time window for measuring and/or sending the first signal, A DRX parameter, and a paging parameter, so as to minimize the total number of wake-ups, thereby reducing energy consumption of the terminal device.

## BRIEF DESCRIPTION OF THE DRAWINGS

FIG. 1 is a schematic diagram of a wireless communication system applicable to embodiments of the present disclosure.

FIG. 2 is an exemplary diagram illustrating the operation process of a DRX duration timer.

FIG. 3 illustrates positions of paging frames (PF) within a DRX cycle and positions of paging occasions (PO) within a PF.

FIG. 4 is a schematic flowchart of a wireless communication method according to embodiments of the present disclosure.

FIG. 5 is a schematic flowchart illustrating interaction of a DRX parameter and/or a paging parameter in a positioning procedure based on a location positioning protocol (LPP) according to embodiments of the present disclosure.

FIG. 6 illustrates a positioning procedure applicable to embodiments of the present disclosure.

FIG. 7 illustrates an uplink positioning process applicable to embodiments of the present disclosure.

FIG. 8 is a schematic flowchart of another wireless communication method according to embodiments of the present disclosure.

FIG. 9 is a schematic structural diagram of a communication device according to embodiments of the present disclosure.

FIG. 10 is a schematic structural diagram of another communication device according to embodiments of the present disclosure.

FIG. 11 is a schematic structural diagram of an apparatus for communication according to embodiments of the present disclosure.

## DETAILED DESCRIPTION OF THE EMBODIMENTS

Technical solutions in the embodiments of the present disclosure are described hereinafter with reference to the accompanying drawings.

## Communication System

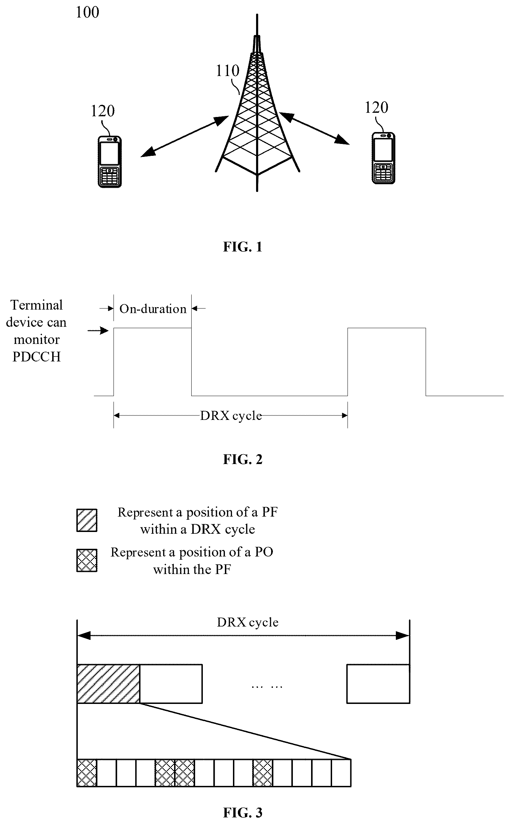

FIG. 1 is a schematic diagram of a wireless communication system 100 applicable to embodiments of the present disclosure. The wireless communication system 100 may include communication devices. The communication devices may include a network device 110 and terminal devices 120. The network device 110 may be a device communicating with the terminal devices 120.

FIG. 1 exemplarily shows one network device and two terminal devices. Optionally, the wireless communication system 100 may include a plurality of network devices and may include other numbers of terminal devices within the coverage area of each network device, which is not limited by the embodiments of the present disclosure.

Optionally, the wireless communication system 100 may also include other network entities such as a network controller and a mobile management entity, which is not limited by the embodiments of the present disclosure.

It should be understood that the technical solutions in the embodiments of the present disclosure may be applied to various communication systems, for example: a 5th generation (5G) or a new radio (NR) system, a long-term evolution (LTE) system, an LTE frequency-division duplex (FDD) system and an LTE time-division duplex (TDD) system. The technical solutions in the embodiments of the present disclosure may also be applied to future communication systems, such as a 6th generation (6G) mobile communication system and a satellite communication system.

The terminal device in the embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a wireless communication device, a user agent, or a user apparatus. The terminal device in the embodiments of the present disclosure may refer to a device that provides voice and/or data connectivity for users and can be used for connection between human, objects, and machines, such as a handheld device and a vehicle-mounted device having a wireless connection function. The terminal device in the embodiments of the present disclosure may be a mobile phone, a pad, a laptop, a palmtop, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or the like. In some embodiments, a UE may serve as a base station. For example, a UE may serve as a dispatch entity, which provides sidelink signals between UEs in vehicle-to-everything (V2X), device to device (D2D) or the like. For example, a cellular phone and a vehicle communicate with each other based on sidelink signals. The cellular phone and a smart home device communicate with each other without relaying communication signals through a base station.

The network device in the embodiments of the present disclosure may be a device for communication with the terminal device. The network device may also include an access network device. The access network device may provide communication coverage for a specific geographic area and may communicate with terminal devices 120 within the coverage area. The access network device may also be referred to as a wireless access network device or a base station. The access network device in the embodiments of the present disclosure may refer to a radio access network (RAN) node (or device) that allows a terminal device to access a wireless network. The access network device may broadly cover, or be replaced with, various names such as a node B (NodeB), an evolved NodeB (eNB), a next generation NodeB (gNB), a relay station, an access point, a transmitting and receiving point (TRP), a transmitting point (TP), a primary eNB (MeNB), a secondary eNB (SeNB), a multi-standard radio (MSR) node, a home base station, a network controller, an access node, a wireless node, an access point (AP), a transit node, a transceiver node, a baseband unit (BBU), a remote ratio unit ( RRU), an active antenna unit (AAU), a remote radio head (RRH), a CU, a DU, a location node, and the like. The base station may be a macro base station, a micro base station, a relay node, a donor node, or the like, or a combination thereof. The base station may also refer to a communication module, a modem, or a chip configured in the above apparatus or device. The base station may also be a device that assumes the function of a base station in a mobile switching center and D2D, V2X or machine-to-machine (M2M) communication, a network-side device in a 6G network, a device that assumes the function of a base station in a future communication system, or the like. The base station may support networks of the same or different access technologies. The embodiments of the present disclosure do not limit the adopted specific technology and specific device form of the network device.

The base station may be stationary or mobile. For example, a helicopter or unmanned aerial vehicle may be configured to serve as a mobile base station, and one or more cells may move depending on the location of the mobile base station. In other examples, the helicopter or unmanned aerial vehicle may be configured to serve as a device to communicate with another base station.

Communication devices involved in a wireless communication system may include not only the access network device and the terminal devices, but also a core network element. The core network element may be implemented by a device, i.e., the core network element is a core network device. It is to be understood that the core network device may also be a network device.

The core network element in the embodiments of the present disclosure may include a network element that processes and forwards signalling and data of a user. For example, the core network device may include a core access and mobility management function (AMF), a session management function (SMF), a user-plane gateway, a location management function (LMF), and the like. The user plane gateway may be a server with functions such as mobility management, routing and forwarding of user plane data, and is generally located on the network side, such as a serving gateway (SGW) or a packet data network gateway (PGW) or a user plane function (UPF). Of course, other network elements can also be included in the core network, which are not listed here.

In some deployments, the network device in the embodiments of the present disclosure may refer to a CU or a DU, or the network device includes a CU and a DU. The gNB may also include an AAU.

The network device and the terminal devices may be deployed on land, including indoor or outdoor, hand-held, or vehicle-mounted; or may be deployed on the water surface; or may be deployed on airplanes, balloons, and satellites. In the embodiments of the present disclosure, the scenario where the network device and the terminal devices are located is not limited.

It should be appreciated that all or some of the functions of the communication devices in the present disclosure may also be implemented by software functions running on hardware, or by virtualization functions instantiated on a platform (e.g., a cloud platform).

## Discontinuous reception

In some communication systems, a network device may configure a terminal device with DRX functionality. When the terminal device is configured with the DRX functionality, the terminal device may discontinuously monitor a physical downlink control channel (PDCCH) to reduce power consumption.

Each medium access control (MAC) entity may have a DRX configuration. DRX configuration parameters include one or more of the following: DRX cycle (drx cycle), DRX on-duration timer (drx-onDurationTimer), delay for the terminal device to start the DRX on-duration timer (drx-StartOffset), DRX inactivity timer (drx-InactivityTimer), DRX retransmission timer (drx-RetransmissionTimer), and DRX uplink retransmission timer (drx-ULRetransmissionTimer).

If the terminal device is configured with the DRX, the terminal device may refrain from monitoring the PDCCH during a DRX inactive period (i.e., entering a sleep state), thereby conserving power. When PDCCH monitoring is required, the terminal device is awakened from the sleep state to enter a DRX active period. During the DRX active period, the terminal device needs to monitor the PDCCH.

Taking the DRX on-duration timer as an example, a description of the DRX active period is given below. FIG. 2 illustrates the operation of the DRX on-duration timer. As shown in FIG. 2, within a DRX cycle, when the DRX on-duration timer is running (i.e., during the "on duration" period shown in FIG. 2), the terminal device can monitor the PDCCH. That is, the DRX active period includes this on duration.

The DRX active period may also depend on other parameters or timers. For example, the DRX active period is related to the DRX inactivity timer. In the case where the DRX inactivity timer has not expired, the current time remains within the DRX active period even if the DRX on-duration timer has expired.

With advancements in communication technologies, certain communication protocols (e.g., 3GPP Release 13) introduced Extended DRX (eDRX). For a terminal device in an idle state, the DRX cycle aligns with the paging cycle, but eDRX parameters differ. eDRX employs a longer DRX cycle than standard DRX, enabling further power savings at the cost of increased downlink data latency. The DRX mentioned later in the present disclosure include eDRX.

It is to be understood that although DRX technology has an impact on the latency of data transmission, this latency does not affect the user experience in most cases. Therefore, it makes sense to implement DRX considering the savings in power consumption of the terminal device.

For a terminal device that is in the RRC idle state, a similar approach to the DRX mechanism is usually adopted to receive paging messages. There exists a paging occasion (PO) during a DRX cycle. The terminal receives paging messages only during the PO period and does not receive paging messages at a time other than the paging occasion, thereby achieving power saving. The paging process is described below.

## Paging

In some communication systems, the network device may send paging to the terminal device in an RRC idle state or an RRC connected state. The paging procedure may be triggered by a core network or a base station. The paging procedure may be used to send a paging request to the terminal device in the RRC idle state, or to notify the terminal device of a system information update. Additionally, the paging procedure may notify the terminal device to receive alert messages sent by an earthquake and tsunami warning system (ETWS) or a commercial mobile alert system (CMAS).

A paging message is carried on a physical downlink shared channel (PDSCH). Before receiving the paging message, the terminal device needs to first acquire a paging parameter via system information and calculate, based on the terminal device's identifier (UE_ID), a frame number of a paging frame (PF) where the paging message is located and a PO within the PF. Subsequently, during the PO within the PF, the terminal device monitors the PDCCH scrambled by a paging radio network temporary identity (P-RNTI) to receive paging indication information, and ultimately receives the paging message based on this paging indication information. When a paging time window (PTW) is configured, the terminal device monitors a paging channel only within the PTW according to the DRX cycle to receive downlink services. Outside the PTW, the terminal device enters a sleep state, that is, the terminal device neither monitors the paging channel nor receives the downlink services.

The aforementioned PF represents a frame number of a system frame where a paging message is expected to appear, while the PO indicates a time instant at which the paging message may occur. FIG. 3 illustrates a position of a PF within a DRX cycle (or paging cycle) and a position of a PO within the PF. As shown in FIG. 3, the PF is located within the DRX cycle, and a single PF may include one or multiple POs. These multiple POs may correspond to different terminal devices. However, for a given terminal device, within the DRX cycle (or paging cycle), the terminal device only needs to monitor its own assigned PO.

The terminal device may calculate the PF and PO based on its UE_ID. In some implementations, a system frame corresponding to a system frame number (SFN) that satisfies the formula (SFN + PF_offset) mod T = (T div N)×(UE_ID mod N) is determined as a PF. Within the PF, an index of the PO assigned to the terminal device can be calculated using the formula i_s = floor (UE_ID/N) mod Ns. T represents a cycle length of the DRX cycle of the terminal device, UE_ID represents the identifier of the terminal device, N represents the number of PFs within the DRX cycle, Ns represents the number of POs within one PF, and PF_offset represents a frame offset of the PF.

## Positioning technology

With the increasing maturity of communication technologies, some communication systems (e.g., 5G systems) can implement a growing number of communication algorithms. These algorithms include high-rate information transmission, positioning technologies, and the like. For example, an indoor and outdoor positioning and navigation system, which is dominated by satellite navigation technology represented by BeiDou and supplemented by technology represented by ultra wideband (UWB) and 5G, is profoundly affecting the lifestyle of modern people.

Some wireless communication systems may include servers. A server typically exhibit high computational power, large storage capacity, and high throughput efficiency. Consequently, the server can perform massive data calculations and execute highly complex algorithms. In the related art, the computation of a terminal device's positional coordinates may be performed on a server, which is also referred to as a positioning server.

The positioning server may be a network device with positioning capabilities provided by an operator. The network device with positioning capabilities may be a core network device or a cloud-based server. For example, the positioning server in the embodiments of the present disclosure may include one or more of the following: location management function (LMF), location management component (LMC), local location management function (LLMF) embedded in the network device, which is not limited by the embodiments of the present disclosure.

Positioning technologies can be categorized into uplink positioning, downlink positioning, and joint uplink-downlink positioning. Regardless of the positioning technology, positioning may be achieved using a first signal. The first signal may include a reference signal. The reference signal may be a sounding reference signal (SRS) or a positioning reference signal (PRS). In uplink positioning, an access network device corresponding to a serving cell may sends configuration information of the SRS. The terminal device may send the SRS based on the configuration information of the SRS. Access network devices of the serving cell and a neighboring cell may receive the SRS, perform estimations of information such as power, delay, or angle based on the received SRS, and either compute the terminal device's location using the information or report the information to a positioning server. The positioning server subsequently computes the terminal device's location based on the reported information, thereby obtaining the terminal device's positional data.

In downlink positioning, the access network devices corresponding to the serving cell and neighboring cell may send PRSs. The terminal device may perform measurements on the received PRSs and report measurement information to the network device. The positioning server may then compute the terminal device's location based on the reported information, thereby obtaining the terminal device's positional data.

As described above, during the positioning procedure, the terminal device needs to send and/or measure a first signal used for positioning. Consequently, the terminal device must wake up from a sleep state. This wake-up process requires the terminal device to perform operations such as measurement and synchronization, resulting in large power consumption.

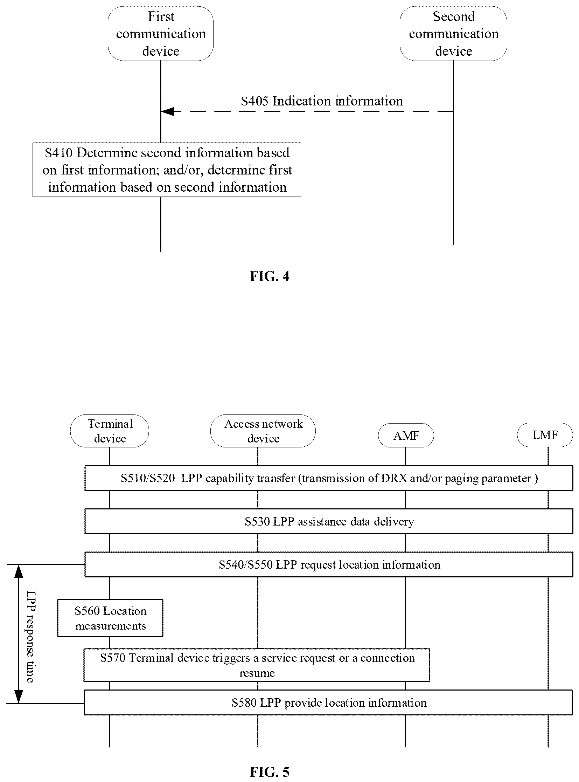

To address the aforementioned issue, embodiments of the present disclosure provide a wireless communication method illustrated in FIG. 4. The wireless communication method shown in FIG. 4 is performed by a first communication device. The wireless communication method may include operation S410.

In operation S410, the first communication device determines second information based on first information; and/or, the first communication device determines the first information based on the second information.

The first information may be related to at least one of a time window for sending a first signal and a time window for measuring a first signal. The first signal may be a signal configured for positioning the terminal device. For example, the first signal may include at least one of PRS and SRS. The first signal may correspond to a serving cell or a neighboring cell. In the case of measuring the first signal, the time window may also be referred to as a measurement gap. Taking the first signal including a PRS as an example, the terminal device may measure the PRS sent by the access network device of the serving cell or neighboring cell during the measurement gap. In the case of sending the first signal, the time window may also be referred to as a processing window. Taking the first signal including an SRS as an example, the terminal device may send the SRS to the access network device of the serving cell or neighboring cell within the processing window.

It should be noted that the time window may refer to a temporal region. Thus, the time window may also be termed a time period or time region. When represented in time units, the time window may include at least one time unit, where the time unit may include, for example, a subframe, an orthogonal frequency division multiplexing (OFDM) symbol, or the like.

It should be noted that the present disclosure does not restrict the representation method of the time window. For example, the time window may be represented by one or more of the following parameters: a start time of the time window, an end time of the time window, a duration of the time window, and the like.

The second information may be related to a DRX parameter and/or a paging parameter. The DRX parameter may include parameters describing a DRX cycle. For example, the DRX parameter may include one or more of the following: a start time of the DRX cycle, a duration of the DRX cycle, a DRX activation time (i.e., a start time of a DRX active period), a duration of the DRX active period, a start time of a DRX on-duration period, a duration of the DRX on-duration period, parameters of a timer associated with DRX, and the like. The paging parameter may include a time region corresponding to paging detection, which may be indicated by a paging frame (PF) and/or a paging occasion (PO).

As described above, the DRX procedure and the paging procedure both involve the wake-up process. The present disclosure may jointly consider the first information and the second information to select an appropriate time window for measuring and/or sending the first signal, and one or more of a DRX parameter and a paging parameter, thereby minimizing the total number of wake-ups to reduce power consumption of the terminal device. For example, after one wake-up, the terminal device may not only measure and/or send the first signal but also perform operations required during paging and/or the DRX active period. Compared with a scenario where one wake-up is triggered for measuring and/or sending the first signal and another wake-up is triggered for paging and/or DRX activation, this implementation reduces at least one wake-up process, thus lowering energy consumption. Alternatively, after waking from a deep sleep state, the terminal device partially or fully retains active functionalities after completing the DRX procedure, paging procedure, and measurement/sending of the first signal, and thus a subsequent wake-up consumes less energy than waking from the deep sleep state, even if the terminal device needs to be reawakened.

Furthermore, based on the present disclosure, resources for the first signal can be rationally configured. Taking the first signal being PRS as an example, if a shorter PRS period is configured to ensure that PRS resources are always available when the terminal device wakes up, this approach places the PRS in a standby mode awaiting measurement by the terminal device. To maintain the PRS in a continuously available state, sufficient PRS resources are required. However, when the terminal device demands high positioning accuracy, the PRS bandwidth must be widened. However, since the PRS resources remain on standby for immediate measurement, this configuration consumes excessive resources, leading to resource waste. Therefore, the present disclosure proposes determining an appropriate time window for sending and/or measuring the first signal based on a DRX parameter and/or a paging parameter, thereby optimizing resource allocation for the first signal and avoiding resource waste.

In the case where the first communication device determines the second information based on the first information, the time window for sending and/or measuring the first signal can be fixed, and the DRX parameter and/or paging parameter can be adapted to this time window. On one hand, the paging cycle is related to the terminal device's identifier, leaving limited flexibility for adjustment. On the other hand, since the DRX cycle is configured based on power consumption and paging latency requirements, significant modifications to the DRX cycle are generally infeasible. Therefore, in some embodiments, the DRX parameter and/or paging parameter may be fixed, and the time window for sending and/or measuring the first signal can be adapted to these parameters, thereby simplifying the implementation of the configuration process.

In some embodiments, the first communication device may include a positioning server. When determining the first information, the first information determined by the positioning server may be associated not only with the serving cell of the terminal device but also with a neighboring cell. That is, the positioning server can implement joint design of the first signal across multiple cells, thereby avoiding interference caused by non-orthogonal first signals between the cells. Furthermore, since the terminal device moves between cells, when configuring first signal resources for the terminal device, the positioning server may allocate first signal resources of multiple cells to the terminal device. This configuration may remain effective for a predefined period without frequent updates. In other words, in the case where the terminal device performs cell reselection or changes its serving cell, the configuration of the first signal may remain unchanged. Therefore, the first signal resources of each cell are typically designed to serve the terminal device across multiple cells. Considering the bandwidth occupied by the first signal and the large number of terminal devices across multiple cells supporting simultaneous positioning, determining the first information via the positioning server enables more targeted and efficient configuration and transmission of the first signal.

In some embodiments, the first communication device may include one or more of the terminal device, the access network device and the like described above. For example, the terminal device may autonomously execute the method illustrated in FIG. 4.

The method illustrated in FIG. 4 may also be performed by a second communication device. The second communication device may include a terminal device and/or a network device. The method illustrated in FIG. 4 may further include operation S405.

In operation S405, the second communication device sends indication information to the first communication device. The indication information may include first indication information and/or second indication information.

In the case where the second information is determined based on the first information, the first indication information may be configured to indicate the first information. In the case where the first information is determined based on the second information, the first indication information may be configured to indicate the second information. That is, in some embodiments, another communication device may determine the first information and indicate it to the first communication device, enabling the first communication device to determine the second information based on the first information. In some embodiments, another communication device may determine the second information and indicate it to the first communication device, enabling the first communication device to determine the first information based on the second information.

In some cases, the first communication device cannot obtain the first information and consequently fails to determine the second information. In other cases, the first communication device cannot obtain the second information and consequently fails to determine the first information. Taking the first communication device being LMF as an example, if the LMF cannot obtain the DRX parameter of the terminal device, the LMF cannot determine the time window for sending and/or measuring the first signal based on the DRX parameter. In this case, the terminal device and/or the access network device may act as the second communication device to send first indication information indicating the DRX parameter to the LMF, thereby enabling the LMF to acquire the DRX parameter. Continuing with the example where the first communication device includes the LMF, as mentioned earlier, in downlink positioning, the terminal device is configured to detect not only a first signal from the serving cell but also a first signal from a neighboring cell. Certain parameters configured for paging of the terminal device are cell-specific, such as a paging frame offset of the terminal device for paging. Additionally, due to the mobility of the terminal device, cell reselection may occur. That is, the paging occasion in the time domain may change upon cell reselection. However, the LMF lacks knowledge of the terminal device's paging configuration-related information. In this case, the terminal device and/or the access network device may act as the second communication device to send first indication information indicating the paging parameter to the LMF

It should be noted that the first communication device may also acquire the first information or the second information without relying on the first indication information. For example, in some cases, the first communication device may autonomously determine the first information to determine the second information based thereon. Similarly, in some cases, the first communication device may autonomously determine the second information to determine the first information based thereon. Taking the first communication device including a terminal device as an example, the terminal device may autonomously determine a DRX parameter and/or a paging parameter, thereby deriving the first information. Therefore, the first communication device may omit receiving the first indication information.

The second indication information may be configured to indicate an RRC state of the terminal device. Based on the RRC state and the identifier of the terminal device, the first communication device can determine the second information and further determine the first information based on the second information. For example, in a case where the RRC state is an idle state or an inactive state, after acquiring the RRC state of the terminal device, the first communication device may determine the second information according to the identifier of the terminal device.

In some embodiments, the first communication device may determine a time region corresponding to paging detection based on the identifier of the terminal device and further determine the first information based on the time region. Within this time region, the terminal device may perform paging detection. The time region corresponding to paging detection may be indicated by parameters such as PF and/or PO. That is, the first communication device may determine the PF and/or PO based on the identifier of the terminal device, thereby determining the first information related to the time window for sending and/or measuring the first signal.

In some embodiments, the second communication device may proactively send indication information to the first communication device. For example, the second communication device may periodically send the indication information to the first communication device.

In some embodiments, in a case where the first communication device requires indication information, the first communication device may send a request to obtain the corresponding indication information. For example, the first communication device may send a first request and/or a second request. The first request may be configured to request acquisition of the first indication information. The second request may be configured to request acquisition of the second indication information. In response to receiving the first request, the second communication device may send the first indication information to the first communication device. In response to receiving the second request, the second communication device may send the second indication information to the first communication device.

The indication information may be carried in one or more of the following signaling: location positioning protocol (LPP) signaling, and new radio positioning protocol a (NRPPa) signaling.

Taking LPP signaling as an example, the indication information may be carried in messages involved in an LPP capability transfer procedure. FIG. 5 is a schematic flowchart of interacting a DRX parameter and/or a paging parameter in an LPP-based positioning procedure according to embodiments of the present disclosure. The method illustrated in FIG. 5 may be performed by an LMF, an AMF, an access network device and a terminal device. The first communication device may be the LMF, and the second communication device may include the access network device and/or the terminal device.

The method illustrated in FIG. 5 may include operations S510 to S580.

Operation S510 and/or operation S520 are configured to implement an LPP capability transfer.

A request by the LMF for a DRX parameter and/or a paging-related parameter, as well as responses from the terminal device or the access network device, may be implemented through operation S510 and/or operation S520. The LMF may send a first request to the terminal device or the access network device to request transmission of a parameter or a parameter set related to DRX, eDRX and paging. The terminal device or the access network device may respond to the first request by transmitting the parameter requested by the LMF.

In operation S530: LPP assistance data delivery.

Operation S540 and/or operation S550: LPP request location information.

Operation S560: The terminal device performs location measurements.

Operation S570: The terminal device triggers a service request or a connection resume.

Operation S580: LPP provide location information.

The time between operation S540 and operation S580 corresponds to an LPP response time.

Taking NRPPa signaling as an example, the access network device may notify the LMF of a DRX parameter and/or a paging parameter of the terminal device via NRPPa signaling. This NRPPa signaling may be sent by the access network device to the LMF when the terminal device accesses a serving cell. Alternatively, the first communication device may include the AMF and/or the LMF, and when the first communication device sends the first request to the terminal device, the first communication device requests a parameter or parameter set related to DRX, eDRX and paging of the terminal device. The access network device may respond to this first request by transmitting the requested parameters. For a terminal device supporting positioning, during the positioning procedure, the access network device may notify the first communication device (which may include the AMF) of the user's DRX and/or paging information.

In some embodiments, in response to the access network device or the first communication device receiving a positioning request from the terminal device, the first communication device may receive indication information sent by the second communication device; or, in response to completion of selection of the positioning server, the first communication device may receive indication information sent by the second communication device. Taking the first communication device including LMF as an example, after the AMF completes selection of the LMF, the AMF may send the indication information to the LMF. Alternatively, after the access network device receives the positioning request, the access network device may send the indication information to the LMF.

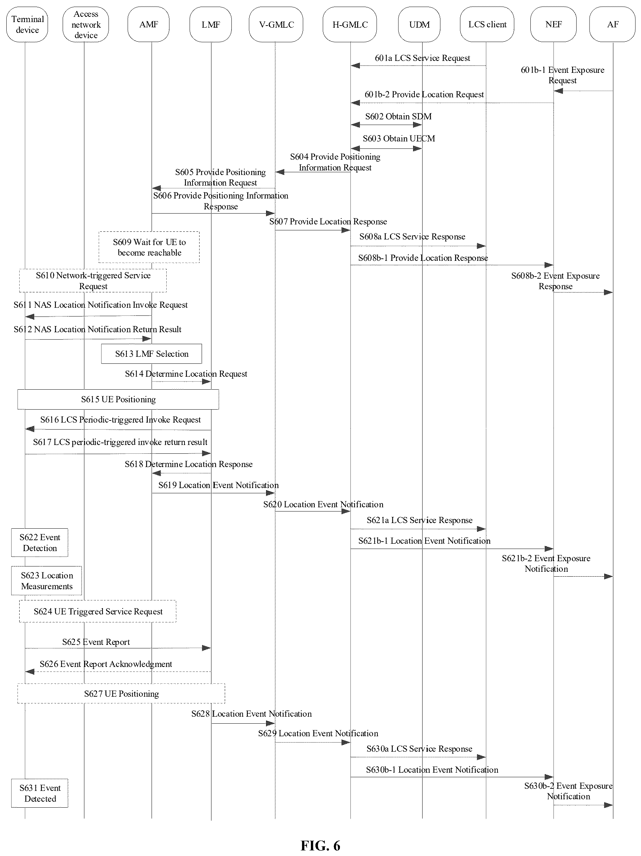

The following describes the indication process of the indication information in conjunction with the positioning procedure illustrated in FIG. 6. The positioning method shown in FIG. 6 may be performed by a terminal device, an access network device (e.g., a new radio radio access network (NR-RAN)), an AMF, an LMF, a visited gateway mobile location center (V-GMLC), a home gateway mobile location center (H-GMLC), a unified data management function (UDM), a location services client (LCS client), a network exposure function (NEF), and an application function (AF). The method shown in FIG. 6 includes operations S601 to S631.

Operation S601 includes operations S601a, S601b-1, and S601b-2.

In operation S601a, the LCS client sends an LCS service request (LCS Service Request) to the H-GMLC.

In operation S601b-1, the AF sends an event exposure request (Nnef_EventExposure_Subscribe Request) to the NEF.

In operation S601b-2, the NEF sends a provide location request (Ngmlc_Location_ProvideLocation Request) to the H-GMLC.

In operation S602, interaction between the H-GMLC and the UDM is performed to obtain subscriber data management (SDM) (Nudm_SDM_Get).

In operation S603, interaction between the H-GMLC and the UDM is performed to obtain UE context management (UECM) (Nudm_UECM_Get).

In operation S604, the H-GMLC sends a provide location request (Ngmlc_Location_ProvideLocation Request) to the V-GMLC.

In operation S605, the V-GMLC sends a provide positioning information request (Namf_Location_ProvidePositioningInfo Request) to the AMF.

In operation S606, the AMF sends a provide positioning information response (Namf_Location_ProvidePositioningInfo Response) to the V-GMLC.

In operation S607, the V-GMLC sends a provide location response (Ngmlc_Location _ProvideLocation Response) to the H-GMLC.

In operation S608a, the H-GMLC sends an LCS service response (LCS Service Response) to the LCS client.

In operation S608b-1, the H-GMLC sends a provide location response (Ngmlc_Location_ProvideLocation Response) to the NEF.

In operation S608b-2, the NEF sends an event exposure response (Nnef_EventExposure_Subscribe Response) to the AF.

In operation S609, the AMF waits for the terminal device to become reachable (Wait for UE to become reachable).

In operation S610, network-triggered service request (Network Triggered Service Request).

In operation S611, the AMF sends a non-access stratum (NAS) location notification invoke request (NAS Location Notification Invoke Request) to the terminal device.

In operation S612, the terminal device sends an NAS location notification return result (NAS Location Notification Return Result) to the AMF.

In operation S613, the AMF performs LMF selection (LMF Selection).

In operation S614, the AMF sends a determine location request (NImf_Location_DetermineLocation Request) to the LMF.

In operation S615, positioning of the terminal device (UE Positioning) is performed.

In operation S616, the LMF sends an LCS periodic-triggered invoke request (LCS Periodic-Triggered Invoke Request) to the terminal device.

In operation S617, the terminal device sends an LCS periodic-triggered invoke return result (LCS Periodic-Triggered Invoke Return Result) to the LMF.

In operation S618, the LMF sends a determine location response (NImf_Location_DetermineLocation Response) to the AMF.

In operation S619, the AMF sends a location event notification (Namf_Location_EventNotify) to the V-GMLC.

In operation S620, the V-GMLC sends a location event notification (Ngmlc_Location_EventNotify) to the H-GMLC.

In operation S621a, the H-GMLC sends an LCS service response (LCS Service Response) to the LCS client.

In operation S621b-1, the H-GMLC sends a location event notification (Ngmlc_Location_EventNotify) to the NEF.

In operation S621-b, the NEF sends an event exposure notification (Nnef_EventExposure_Notify) to the AF.

In operation S622, the terminal device performs event detection (Event Detected).

In operation S623, the terminal device performs location measurements (Location Measurements).

In operation S624, the terminal device triggers a service request (UE Triggered Service Request).

In operation S625, the terminal device sends an event report (Event Report) to the LMF.

In operation S626, the LMF sends an event report acknowledgment (Event Report Acknowledgment) to the terminal device.

In operation S627, a terminal device positioning procedure (UE Positioning) is performed.

In operation S628, the LMF sends a location event notification (NImf_Location_EventNotify) to the V-GMLC.

In operation S629, the V-GMLC sends a location event notification (Ngmlc_Location_EventNotify) to the H-GMLC.

In operation S630a, the H-GMLC sends an LCS service response (LCS Service Response) to the LCS client.

In operation S630b-1, the H-GMLC sends a location event notification (Ngmlc_Location_EventNotify) to the NEF.

In operation S630b-2, the NEF sends an event exposure notification (Nnef_EventExposure_Notify) to the AF.

In operation S631, the terminal device performs event detection (Event Detected).

As shown in FIG. 6, in the positioning procedure illustrated in FIG. 6, during Operation S613, the AMF may perform LMF selection. When the LMF selection is completed, the AMF may act as the second communication device to send indication information to the LMF which acts as the first communication device. Alternatively, after the access network device receives a positioning request, the access network device may act as the second communication device to notify the LMF acting as the first communication device of the indication information. Alternatively, after the LMF acting as the first communication device receives the positioning request, the LMF may receive indication information sent by the access network device acting as the second communication device.

After the first communication device determines the first information, the first communication device may send the first information to the second communication device. The second communication device may configure a time window for sending and/or measuring the first signal by referencing the first information. Here, the first communication device may include, for example, a positioning server. The second communication device may include, for example, one or more of the following devices: a terminal device, an access network device corresponding to a serving cell of the terminal device, and an access network device corresponding to a neighboring cell of the terminal device.

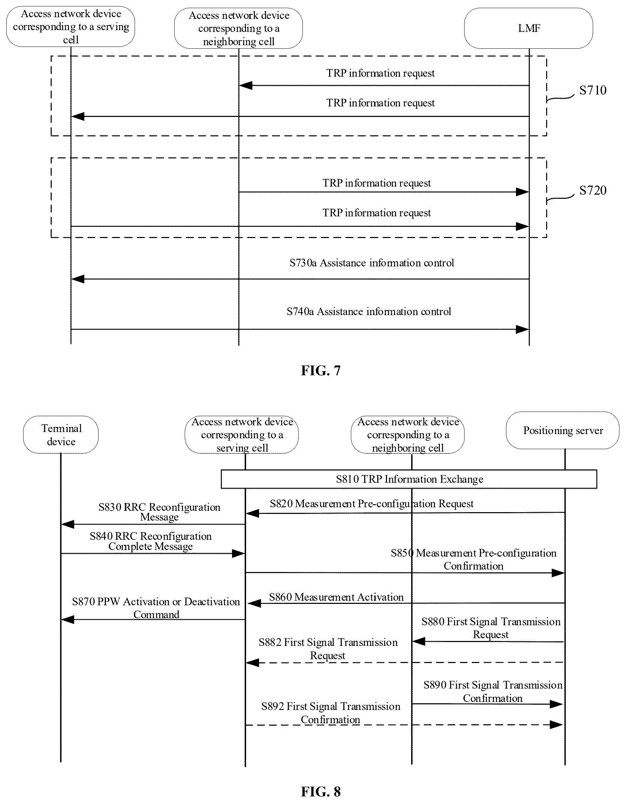

In some embodiments, the first signal may be carried in a configuration reference message or an assistance message of the first signal. The following uses the first signal including an SRS as an example for description in conjunction with FIG. 7. It should be noted that although FIG. 7 uses the SRS as an example, the method shown in FIG. 7 may also be applied to another first signal, such as a PRS.

FIG. 7 includes partial operations of an uplink positioning procedure. The operations shown in FIG. 7 may be performed by an access network device corresponding to a serving cell, an access network device corresponding to a neighboring cell, and an LMF. Based on FIG. 7, in a case where uplink positioning is performed, before conducting positioning measurements, the LMF may send information requests to the access network devices corresponding to the serving cell and the neighboring cell, respectively. The access network devices corresponding to the serving cell and the neighboring cell may notify the LMF of SRS configuration information. A detailed description is provided below.

In operation S710, The LMF sends transmission and reception point (TRP) information requests (TRP information request) to the access network devices corresponding to the serving cell and the neighboring cell, respectively.

In operation S710, when the LMF sends the TRP information requests, the LMF may send an expected time for SRS resources and other parameters. The other parameters may include, for example, an operating frequency band.

Prior to operation S710, the LMF may request a configurable range for SRS from the access network device or the terminal device. Alternatively, the access network device or the terminal device may report the configurable range for SRS. When the access network device or the terminal device reports an identifier of the terminal device while reporting the configurable range.

In operation S720: both the access network devices corresponding to the serving cell and the neighboring cell send TRP information responses (TRP information response) to the LMF. The TRP information response may include candidate SRS configurations (candidate SRS config).

Thus, through operations S710 and S720, the TRP information exchange process is implemented. The LMF collects the candidate SRS configurations of TRPs via this process. It should be noted that operations S710 and S720 may be performed before the positioning procedure.

In operations S730a and S740a, the LMF sends an NRPPa message "assistance information control" to the access network device corresponding to the serving cell and receives an "assistance information feedback" to enable the access network device to send the configured SRS.

As described above, the second communication device that receives the first information may reference the first information to configure the time window for sending and/or measuring the first signal. Furthermore, the first information may include information of the actually configured time window for sending and/or measuring the first signal. By sending the first information, the first communication device informs another communication device of the actual configuration of the time window for sending and/or measuring the first signal, thereby achieving precise positioning. A detailed description is provided below with reference to FIG. 8

The method shown in FIG. 8 is related to a pre-configured measurement gap and a pre-configured processing window (PPW).

The method in FIG. 8 includes operations S810 to S870.

In operation S810, TRP information exchange is performed between the access network devices and the positioning server.

In operation S820, the positioning server sends a measurement pre-configuration request (NRPPa MEASUREMENT PRECONFIGURATION REQUIRED) to the access network device.

In operation S830, the access network device sends an RRC reconfiguration message (RRC reconfiguration message) to the terminal device. This message includes pre-configured PRS processing window configurations (Pre-configured PRS Processing window configurations).

In operation S840, the terminal device sends an RRC reconfiguration complete message (RRC reconfiguration complete message) to the access network device.

In some communication standards (e.g., R17), pre-configured measurement gaps and PPWs are introduced to reduce positioning latency. As shown in FIG. 8, for this functionality, operations S810 and S840 introduce NRPPa messages "measurement pre-configuration required/confirm" to send PRS configurations of the terminal device's neighboring cell to the access network device corresponding to the serving cell. This enables the serving cell's access network device to pre-configure PPWs or measurement gaps for the terminal device.

In operation S850, the access network device sends a measurement pre-configuration confirmation (NRPPa MEASUREMENT PRECONFIGURATION CONFIRM) to the positioning server.

In operation S860, the positioning server sends a measurement activation instruction (NRPPa MEASUREMENT ACTIVATION) to the access network device.

In operation S870, the access network device sends a PPW activation or deactivation command (DL MAC CE PPW Activation/Deactivation Command) via a downlink MAC control element (MACCE).

In operation S880, the positioning server sends a first signal transmission request to the access network device corresponding to the neighboring cell.

In the case where the first signal includes a PRS, the first signal transmission request may also be referred to as a PRS transmission request (NRPPa PRS transmission required).

In operation S890, the positioning server receives a first signal transmission confirmation sent by the access network device corresponding to the neighboring cell.

In the case where the first signal includes a PRS, the first signal transmission confirmation may also be referred to as a PRS transmission confirmation (NRPPa PRS transmission confirm).

It can be seen that operations S840 and S850 indicate possible PPWs and measurement gaps, while operations S880 and S890 notify the neighboring cell of the actual configured PPWs and measurement gaps for the first signal transmission.

In some embodiments, the method shown in FIG. 8 may further include operations S882 and S892.

In operation S882, the positioning server sends a first signal transmission request to the access network device corresponding to the serving cell.

In operation S892, the positioning server receives a first signal transmission confirmation sent by the access network device corresponding to the serving cell.

In some embodiments, the first information may include one or more of the following: a candidate time window for sending the first signal, a candidate time window for measuring the first signal, a start time of the time window, and a duration of the time window.

The candidate time window may be a time window that can be used for sending and/or measuring the first signal. Within the candidate time window, the actually configured time window for sending and/or measuring the first signal may be selected. Thus, the first information determined by the first communication device may not necessarily represent the actual configured time window for sending and/or measuring the first signal. That is, the first information may provide configuration suggestions for the time window to facilitate its configuration. Taking the first communication device including the LMF as an example, the LMF may determine candidate time windows and send them to the access network device to negotiate the actual configured time window. After interacting with the access network device, the LMF may select the actual configured time window from the candidate time windows.

In the case where the first information includes the start time and/or duration of the time window, the first information determined by the first communication device may directly specify the actual configured time window for sending and/or measuring the first signal. In other words, the first communication device may determine the time window for sending and/or measuring the first signal. Taking the first communication device being a terminal device as an example, the terminal device may determine the time window for sending and/or measuring the first signal and send and/or measure the first signal within this time window.

As described above, the time window for sending and/or measuring the first signal may be determined based on the time region corresponding to paging detection. For example, the time window may be configured with an offset before or after the paging detection time region. Such a configuration allows the terminal device to perform both first signal transmission/measurement and paging detection in a single wake-up period, thereby reducing the number of wake-ups and lowering power consumption. It should be noted that this offset should not cause the time window to be excessively advanced or delayed.

In some embodiments, the time window for sending and/or measuring the first signal may be determined based on the DRX active period. For example, the time window may be configured near the DRX active period. The start time of the time window may be configured before the DRX active period. Alternatively, the start time of the time window may be configured after the DRX active period. Alternatively, there may be no gap between the time window and the DRX active period.

As mentioned above, for the time window for measuring the first signal (which may be understood as a measurement gap), data transmission is prohibited during this window. Therefore, the present disclosure proposes that the time window for measuring the first signal does not overlap with the DRX active period. In addition, for the time window for sending the first signal, sending the first signal belongs to an uplink transmission, while the DRX active period is used for downlink transmission. If the time window for sending the first signal does not overlap with the DRX active period, simultaneous uplink and downlink scheduling can be prevented, reducing scheduling complexity. In summary, the present disclosure proposes that the time windows for measuring and/or sending the first signal does not overlap with the DRX active period.

The start time of the time window for sending and/or measuring the first signal may be determined based on a first offset. The first offset may be related to one or more of the following: the DRX active period, PPW parameter, and the paging cycle.

As an implementation, the first offset may be determined based on whether the time window for sending and/or measuring the first signal is within the PPW. For example, if the time window is within the PPW, the first offset may take a first value. If the time window is outside the PPW, the first offset may take a second value. The first value may be different from the second value. In response to the time window being within the PPW, the DRX may be an ordinary DRX (i.e., the first offset is determined based on the DRX cycle). In response to the time window being outside the PPW, the DRX may be eDRX (i.e., the first offset is determined based on the eDRX cycle).

As another implementation, the start time of the time window may be determined based on a paging parameter. For example, the system frame number (SFN) corresponding to the start time may satisfy: $(SFN + PF\_offset + Pos\_offset) \bmod T = (T \operatorname{div} N)*(UE\_ID \bmod N)$. SFN represents a system frame number. Pos_offset represents a first offset. T represents a length of the DRX cycle of the terminal device. UE_ID represents an identifier of the terminal device. N represents a number of PFs within the DRX cycle. Ns represents a number of paging occasions (PO) within one PF. PF_offset represents a frame offset of the PF. mod represents a modulo operation. In the case where the time window is located within one system frame, the SFN corresponding to the start time may also be referred to as the system frame number corresponding to the time window.

As another implementation, the start time of the time window may be determined by offsetting a reference point (e.g., the DRX activation time) backward by the first offset. The DRX activation time may be the start time of the DRX active period.

As discussed above, the duration of the DRX active period may vary-it may align with the DRX cycle or be extended via a DRX inactivity timer. If the start time of the time window for sending and/or measuring the first signal is configured after the DRX activation time, it may cause data interruption or prolonged active time. For example, a short interval between the DRX activation time and the start time of the time window may result in the possibility that sending and/or measurement of the first signal is required when the DRX active period does not end, that is, the measurement gap is entered during the DRX active period, leading to interruption of data transmission. A long interval between the DRX activation time and the start time of the time window may result in that synchronization with the network side is continuously maintained from termination of the DRX ON duration until commencement of said starting time, thereby resulting in unnecessary power consumption. To address this, the present disclosure proposes configuring the start time of the time window for measuring and/or sending the first signal to precede the DRX activation time by the first offset. This approach avoids data interruption and reduces power consumption.

It should be noted that the first offset may be preset (e.g., standardized) or determined dynamically by the first communication device.

As a possible implementation, the first offset may be related to the time window for sending and/or measuring the first signal. For example, the first offset may be greater than or equal to the duration of the time window. However, the first offset should not significantly exceed the duration of the time window to avoid unnecessarily maintaining synchronization between the terminal device and the network device for an extended period after a single wake-up, which would increase power consumption. For example, the first offset may be less than or equal to a first duration threshold. The first duration threshold is slightly larger than the duration of the time window.

In some embodiments, the duration of the time window for sending and/or measuring the first signal may correlate with the terminal device's capability. The terminal device may report the duration of the time window determined based on the terminal device's capability to the first communication device to facilitate resource configuration for the first signal.

The above details the method embodiments of the present disclosure. The following describes the apparatus embodiments. It should be understood that the descriptions of the method and apparatus embodiments correspond to each other; thus, portions not elaborated herein may refer to the foregoing method embodiments.

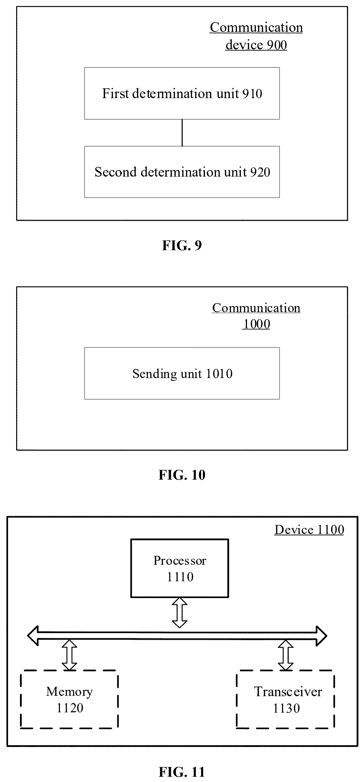

FIG. 9 is a schematic structural diagram of a communication device 900 according to embodiments of the present disclosure. The communication device 900 is a first communication device and includes: a first determination unit 910 and/or a second determination unit 920.

The first determination unit 910 is configured to determine second information based on first information. The second determination unit 920 is configured to determine first information based on second information. The first information is related to at least one of a time window for sending a first signal and a time window for measuring a first signal, the second information is related to at least one of a discontinuous reception (DRX) parameter and a paging parameter of a terminal device, and the first signal is configured for positioning the terminal device.

In some embodiments, the communication device 900 is further configured to: receive indication information sent by a second communication device, the indication information including at least one of first indication information and second indication information. The first indication information is configured to indicate the first information in response to the second information being determined based on the first information, and the first indication information is configured to indicate the second information in the case where the first information is determined based on the second information. The second indication information is configured to indicate a radio resource control (RRC) state of the terminal device.

In some embodiments, the communication device 900 is further configured to send at least one of a first request and a second request. The first request is configured to request acquisition of the first indication information, and the second request is configured to request acquisition of the second indication information.

In some embodiments, the indication information is carried in one or more of following signalings: a location positioning protocol (LPP) signaling, and a new radio positioning protocol a (NRPPa) signaling.

In some embodiments, receiving the indication information sent by the second communication device includes: receiving the indication information sent by the second communication device in response to an access network device or the first communication device receiving a positioning request from the terminal device; or receiving the indication information sent by the second communication device in response to completion of selection of a positioning server.

In some embodiments, the communication device 900 is further configured to: determine the second information based on the RRC state and an identifier of the terminal device.

In some embodiments, determining the second information based on the RRC state and the identifier of the terminal device includes: determining a time region corresponding to paging detection based on the identifier of the terminal device; and determining the second information based on the time region.

In some embodiments, in the case where the first information is determined based on the second information, the communication device is further configured to: send the first information to the second communication device.

In some embodiments, the first information is carried in a configuration reference message of the first signal or auxiliary information of the first signal.

In some embodiments, the first communication device includes a positioning server, and the second communication device includes one or more of the terminal device, an access network device corresponding to a neighboring cell of the terminal device, and an access network device corresponding to a serving cell of the terminal device.

In some embodiments, the first information includes one or more of following information: a candidate time window for sending the first signal, a candidate time window for measuring the first signal, a start time of the time window, and a duration of the time window.

In some embodiments, in the case where the first information is determined based on the second information and related to the start time, the start time is further determined based on a first offset, where the first offset is related to one or more of a DRX active period, a preconfigured processing window (PPW) parameter, and a paging cycle.

In some embodiments, in response to the time window being within the PPW, the first offset is a first value, and in response to the time window being outside the PPW, the first offset is a second value.

In some embodiments, a system frame number corresponding to the start time satisfies: $(SFN + PF\_offset + Pos\_offset) \bmod T = (T \operatorname{div} N) \times (UE\_ID \bmod N)$, where SFN represents the system frame number, Pos_offset represents the first offset, T represents a cycle length of a DRX cycle of the terminal device, UE_ID represents an identifier of the terminal device, N represents a number of paging frames (PF) in the DRX cycle, Ns represents a number of paging occasions (PO) within one PF, and Pos_offset represents a frame offset of the PF.

In some embodiments, a DRX activation time is a first time instance, and the start time precedes the first time instance by the first offset.

In some embodiments, the first offset is preset or determined by the first communication device.

In some embodiments, the first offset is greater than or equal to the duration of the time window.

In some embodiments, the first offset is less than or equal to a first duration threshold, where the first duration threshold is greater than the duration of the time window.

In some embodiments, the first signal includes at least one of a positioning reference signal (PRS) and a sounding reference signal (SRS).

FIG. 10 shows a communication device 1000 according to embodiments of the present disclosure. The communication device 1000 is a second communication device and includes a sending unit 1010.

The sending unit 1010 is configured to send indication information to a first communication device, the indication information including at least one of first indication information and second indication information. In the case where the first indication information is configured to indicate first information, the first information is configured to determine second information, and in the case where the first indication information is configured to determine the second information, the second information is configured to determine the first information. The first information is related to at least one of a time window for sending a first signal and a time window for measuring a first signal, the second information is related to at least one of a discontinuous reception (DRX) parameter and a paging parameter of a terminal device, the first signal is configured for positioning the terminal device, the second indication information is configured to indicate a radio resource control (RRC) state of the terminal device, and in the case where the first information is determined based on the second information, the RRC state and an identifier of the terminal device are configured to determine the second information.

In some embodiments, the communication device 1000 is configured to receive at least one of a first request and a second request sent by the first communication device. The first request is configured to request acquisition of the first indication information, and the second request is configured to request acquisition of the second indication information.

In some embodiments, the first indication information is carried in one or more of following signalings: a location positioning protocol (LPP) signaling, and a new radio positioning protocol a (NRPPa) signaling.

In some embodiments, sending the indication information to the first communication device includes: sending the indication information to the first communication device in response to an access network device or the first communication device receiving a positioning request from the terminal device; or sending the indication information to the first communication device in response to completion of selection of a positioning server.

In some embodiments, in the case where the first information is determined based on the second information, the communication device is further configured to: receive the first information sent by the first communication device.

In some embodiments, the first information is carried in a configuration reference message of the first signal or auxiliary information of the first signal.

In some embodiments, the identifier of the terminal device is configured to determine a time region corresponding to paging detection, and the second information is determined based on the time region.

In some embodiments, the first communication device includes a positioning server, and the second communication device includes one or more of the terminal device, an access network device corresponding to a neighboring cell of the terminal device, and an access network device corresponding to a serving cell of the terminal device.

In some embodiments, the first information includes one or more of following information: a candidate time window for sending the first signal, a candidate time window for measuring the first signal, a start time of the time window, and a duration of the time window.

In some embodiments, in the case where the first information is determined based on the second information and related to the start time, the start time is further determined based on a first offset, where the first offset is related to one or more of a DRX active period, a preconfigured processing window (PPW) parameter, and a paging cycle.

In some embodiments, in response to the time window being within the PPW, the first offset is a first value, and in response to the time window being outside the PPW, the first offset is a second value.

In some embodiments, a system frame number corresponding to the start time satisfies: $(SFN + PF\_offset + Pos\_offset) \bmod T = (T \operatorname{div} N) \times (UE\_ID \bmod N)$, where SFN represents the system frame number, Pos_offset represents the first offset, T represents a cycle length of a DRX cycle of the terminal device, UE_ID represents an identifier of the terminal device, N represents a number of paging frames (PF) in the DRX cycle, Ns represents a number of paging occasions (PO) within one PF, and Pos_offset represents a frame offset of the PF.

In some embodiments, a DRX activation time is a first time instance, and the start time precedes the first time instance by the first offset.

In some embodiments, the first offset is preset or determined by the first communication device.

In some embodiments, the first offset is greater than or equal to the duration of the time window.

In some embodiments, the first offset is less than or equal to a first duration threshold, where the first duration threshold is greater than the duration of the time window.

In some embodiments, the first signal includes at least one of a positioning reference signal (PRS) and a sounding reference signal (SRS).

In an optional embodiment, the transmission unit 1010 may be implemented as a transceiver 1130, and the first determination unit 910 or the second determination unit 920 may be implemented as a processor 1110. The communication device 900 or communication device 1000 may further include a memory 1120, as specifically illustrated in FIG. 11.

FIG. 11 is a schematic structural diagram of a communication apparatus according to embodiments of the present disclosure. The dotted lines in FIG. 11 indicate that the corresponding unit or module is optional. The apparatus 1100 may be configured to implement the method described in the foregoing method embodiments. The apparatus 1100 may be a chip, a terminal device, or a network device.

The apparatus 1100 may include one or more processors 1110. The processor 1110 may support the apparatus 1100 in implementing the method described in the preceding method embodiments. The processor 1110 may be a general purpose processor or an application-specific processor. For example, the processor may be a central processing unit (CPU). Alternatively, the processor may be a general processor, a digital signal processor (DSP), an application specific integrated circuit (ASIC), a field programmable gate array (FPGA) or another programmable logic device, a discrete gate or transistor logic device, or a discrete hardware component, or the like. The general-purpose processor may be a microprocessor or any customary processor or the like.

The apparatus 1100 may further include one or more memories 1120. The memory 1120 has stored thereon a program that is executable by the processor 1110 to cause the processor 1110 to perform the method described in the preceding method embodiments. The memory 1120 may be separate from the processor 1110 or integrated within the processor 1110.

The apparatus 1100 may further include a transceiver 1130. The processor 1110 may communicate with another device or a chip by the transceiver 1130. For example, the processor 1110 may transmit data to, or receive data from, another device or a chip by the transceiver 1130.

Some embodiments of the present disclosure further provide a computer-readable storage medium configured to store a program. The computer-readable storage medium may be applied to a terminal device or a network device according to the embodiments of the present disclosure, and the program causes a computer to perform the method performed by the terminal device or the network device according to the respective embodiments of the present disclosure.

Some embodiments of the present disclosure further provide a computer program product. The computer program product includes a program. The computer program product may be applied to a terminal device or a network device according to the embodiments of the present disclosure, and the more program causes a computer to perform the method performed by the terminal device or the network device according to the respective embodiments of the present disclosure.

Some embodiments of the present disclosure further provide a computer program. The computer program may be applied to a terminal device or a network device according to the embodiments of the present disclosure, and the computer program causes a computer to perform the method performed by the terminal device or the network device according to the respective embodiments of the present disclosure.

It should be understood that the terms "system" and "network" in the specification are generally exchanged. Further, the terms used herein are for the purpose of describing particular embodiments only and are not intended to limit the present disclosure. The terms such as "first," "second," "third," "fourth," and the like in the specifications, claims and the accompanying drawings of the present disclosure are intended to distinguishing different objects but are not intended to define a specific sequence. In addition, terms "comprise," "include," and variations thereof are intended to define a non-exclusive meaning.

In the embodiments of the present disclosure, "an indication" mentioned in the specification may be a direct indication, an indirect indication, or an association. By way of example, A indicates B, which can mean that A directly indicates B, e.g., B can be obtained by A; can also indicate that A indicates B indirectly, for example A indicates C, and B can be obtained by C; it can also be shown that there is an association between A and B.

In the embodiments of the present disclosure, "B corresponding to A" means that B is associated with A, from which B may be determined. However, it should also be understood that determining B from A does not mean determining B from A alone, and B may also be determined from A and/or other information.

In the embodiments of the present disclosure, the term "correspond" or derivatives thereof mean that there is a direct correspondence or an indirect correspondence between the two, that there is a correlation between the two, and that there is a relationship between indicating and being indicated, configuring and being configured, or the like.

In embodiments of the present disclosure, "predefined" or "pre-configured" may be implemented by pre-storing a corresponding code, table, or other means that may be used to indicate relevant information in a device (e.g., including a terminal device and a network device), and the present disclosure does not limit the specific implementation thereof. For example, the term "predefined" may refer to "defined in the protocol."

In embodiments of the present disclosure, the term "protocol" may refer to a standard protocol in the field of communications, and may include, for example, the LTE protocol, the NR protocol, and related protocols used in future communication systems, without limitation.

In the embodiments of the present disclosure, the term "and/or" is merely an association relationship for describing associated objects, which represents that there may exist three types of relationships, for example, A and/or B may represent three situations: only A exists, both A and B exist, and only B exists. In addition, the forward-slash symbol "/" generally represents an "or" relationship between associated objects before and after the symbol.

In the embodiments of the present disclosure, "include" may refer to direct inclusion or indirect inclusion. Optionally, the "include" referred to in embodiments of the present disclosure may be replaced with "indicate" or "configured to determine." For example, A includes B, which may be replaced with A indicates B, or A is configured to determine B.

In various embodiments of the present disclosure, the sequence numbers of the above various processes or operations do not denote a preferred sequence of performing the processes or operations; and the sequence of performing the processes and operations should be determined according to the functions and internal logics thereof, which shall not cause any limitation to the implementation process of the embodiments of the present disclosure.

In the several embodiments provided in the present disclosure, it should be understood that the disclosed system, apparatus and method may be practiced in other manners. The above described device embodiments are merely illustrative. For example, the unit division is merely logical function division and may be other divisions in actual practice. For example, multiple units or components may be combined or integrated into another device, or some features can be ignored or not performed. In addition, the displayed or discussed mutual couplings or direct couplings or communication connections may be implemented through some interfaces. The indirect couplings or communication connections between the devices or units may be implemented in electronic, mechanical or other forms.

The units which are described as separate components may be physically separated or may be not physically separated, and the components which are illustrated as units may be or may not be physical units, that is, the components may be located in the same location or may be distributed into a plurality of network units. Some or all of the units may be selected according to actual needs to achieve the objectives of the solutions of the embodiments.

In addition, functional units in the embodiments of the present disclosure may be integrated into one processing unit, or each of the units may exist along physically, or two or more units may be integrated into one unit.

In the above embodiments, the technical solutions may be totally or partially practiced by software, hardware, firmware or any combination thereof. During practice by software, the technical solutions may be totally or partially implemented in the form of a computer program product. The computer program product includes one or a plurality of computer-executable instructions. The computer program instructions, when loaded and executed on a computer, may cause the computer to totally or partially perform the procedures or functions in the embodiments of the present disclosure. The computer may be a general computer, a dedicated computer, a computer network, or another programming device. The computer-executable instructions may be stored in a computer-readable storage medium, or transferred from one computer-readable storage medium to another. For example, the computer-executable instructions may be sent from one website, computer, server or data center to another in a wired fashion, for example, a coaxial cable, an optical fiber, a digital subscriber line (DSL) or a wireless fashion, for example, an infrared ray, a radio, a microwave or the like. The computer-readable storage medium may be any available medium that is accessible or a data storage device such as a server, a data center or the like integrated with one or a plurality of available media. The available medium may be a magnetic medium, for example, a floppy disk, a hard disk or a magnetic tape, an optical medium, for example, a digital versatile disc (DVD), or a semiconductor medium, for example, a solid state disk (SSD) or the like.

The above embodiments are configured only for illustrating the present disclosure, but are not intended to limit the protection scope of the present disclosure. Various modifications and replacements readily derived by those skilled in the art within technical disclosure of the present disclosure shall fall within the protection scope of the present disclosure. Therefore, the protection scope of the present disclosure is subject to the appended claims.

**Claims**

1. A wireless communication method, comprising at least one of:

   determining, by a first communication device, second information based on first information; and/or
   determining, by a first communication device, the first information based on the second information;
   wherein the first information is related to at least one of a time window for sending a first signal and a time window for measuring a first signal, the second information is related to at least one of a discontinuous reception (DRX) parameter and a paging parameter of a terminal device, and the first signal is configured for positioning of the terminal device.

2. The wireless communication method according to claim 1, further comprising:

   receiving, by the first communication device, indication information sent by a second communication device, the indication information including at least one of first indication information and second indication information;
   wherein the first indication information is configured to indicate the first information in the case where the second information is determined based on the first information, and the first indication information is configured to indicate the second information in the case where the first information is determined based on the second information; and
   wherein the second indication information is configured to indicate a radio resource control (RRC) state of the terminal device.

3. The wireless communication method according to claim 2, further comprising:

   sending, by the first communication device, at least one of a first request and a second request;
   wherein the first request is configured to request acquisition of the first indication information, and the second request is configured to request acquisition of the second indication information.

4. The wireless communication method according to claim 2 or 3, wherein the indication information is carried in one or more of following signalings:
   a location positioning protocol (LPP) signaling, and a new radio positioning protocol a (NRPPa) signaling.

5. The wireless communication method according to any one of claims 2 to 4, wherein receiving, by the first communication device, the indication information sent by the second communication device includes:

   receiving, by the first communication device, the indication information sent by the second communication device in response to an access network device or the first communication device receiving a positioning request from the terminal device; or
   receiving, by the first communication device, the indication information sent by the second communication device in response to completion of selection of a positioning server.

6. The wireless communication method according to any one of claims 2 to 5, wherein before determining, by the first communication device, the first information based on the second information, the wireless communication method further includes:
   determining, by the first communication device, the second information based on the RRC state and an identifier of the terminal device.

7. The wireless communication method according to claim 6, wherein determining, by the first communication device, the second information based on the RRC state and the identifier of the terminal device includes:

   determining, by the first communication device, a time region corresponding to paging detection based on the identifier of the terminal device; and
   determining, by the first communication device, the second information based on the time region.

8. The wireless communication method according to any one of claims 1 to 7, wherein in the case where the first information is determined based on the second information, the wireless communication method further comprises:
   sending, by the first communication device, the first information to the second communication device.

9. The wireless communication method according to claim 8, wherein the first information is carried in a configuration reference message of the first signal or auxiliary information of the first signal.

10. The wireless communication method according to any one of claims 2 to 9, wherein the first communication device includes a positioning server, and the second communication device includes one or more of the terminal device, an access network device corresponding to a neighboring cell of the terminal device, and an access network device corresponding to a serving cell of the terminal device.

11. The wireless communication method according to any one of claims 1 to 10, wherein the first information includes one or more of following information:

    a candidate time window for sending the first signal;
    a candidate time window for measuring the first signal;
    a start time of the time window; and
    a duration of the time window.

12. The wireless communication method according to claim 11, wherein in a case where the first information is determined based on the second information and related to the start time, the start time is further determined based on a first offset, wherein the first offset is related to one or more of a DRX active period, a preconfigured processing window (PPW) parameter, and a paging cycle.

13. The wireless communication method according to claim 12, wherein in response to the time window being within the PPW, the first offset is a first value, and in response to the time window being outside the PPW, the first offset is a second value.

14. The wireless communication method according to claim 12, wherein a system frame number corresponding to the start time satisfies:

$$(\text{SFN} + \text{PF\_offset} + \text{Pos\_offset}) \bmod T = (T \operatorname{div} N) \times (\text{UE\_ID} \bmod N),$$

    wherein SFN represents the system frame number, Pos_offset represents the first offset, T represents a cycle length of a DRX cycle of the terminal device, UE_ID represents an identifier of the terminal device, N represents a number of paging frames (PF) in the DRX cycle, Ns represents a number of paging occasions (PO) within one PF, and PF_offset represents a frame offset of the PF.

15. The wireless communication method according to claim 12, wherein a DRX activation time is a first time instance, and the start time precedes the first time instance by the first offset.

16. The wireless communication method according to any one of claims 12 to 15, wherein the first offset is preset or determined by the first communication device.

17. The wireless communication method according to any one of claims 12 to 16, wherein the first offset is greater than or equal to the duration of the time window.

18. The wireless communication method according to claim 17, wherein the first offset is less than or equal to a first duration threshold, wherein the first duration threshold is greater than the duration of the time window.

19. The wireless communication method according to any one of claims 1 to 18, wherein the first signal includes at least one of a positioning reference signal (PRS) and a sounding reference signal (SRS).

20. A wireless communication method, comprising:

    sending, by a second communication device, indication information to a first communication device, the indication information including at least one of first indication information or second indication information;
    wherein when the first indication information indicates first information, the first information is configured to determine second information, or when the first indication information indicates second information, the second information is configured to determine the first information, wherein the first information is related to at least one of a time window for sending a first signal and a time window for measuring a first signal, the second information is related to at least one of a discontinuous reception (DRX) parameter and a paging parameter of a terminal device, the first signal is configured for positioning of the terminal device, the second indication information indicates a radio resource control (RRC) state of the terminal device, and when the first information is determined based on the second information, the RRC state and an identifier of the terminal device are configured to determine the second information.

21. The wireless communication method according to claim 20, further comprising:

    receiving, by the second communication device, at least one of a first request and a second request sent by the first communication device;
    wherein the first request is configured to request acquisition of the first indication information, and the second request is configured to request acquisition of the second indication information.

22. The wireless communication method according to claim 20 or claim 21, wherein the first indication information is carried in one or more of following signalings:
    a location positioning protocol (LPP) signaling, and a new radio positioning protocol a (NRPPa) signaling.

23. The wireless communication method according to any one of claims 20 to 22, wherein sending, by the second communication device, the indication information to the first communication device includes:

    sending, by the second communication device, the indication information to the first communication device in response to an access network device or the first communication device receiving a positioning request from the terminal device; or
    sending, by the second communication device, the indication information to the first communication device in response to completion of selection of a positioning server.

24. The wireless communication method according to any one of claims 20 to 23, wherein in the case where the first information is determined based on the second information, the wireless communication method further comprises:
    receiving, by the second communication device, the first information sent by the first communication device.

25. The wireless communication method according to claim 24, wherein the first information is carried in a configuration reference message of the first signal or auxiliary information of the first signal.

26. The wireless communication method according to any one of claims 20 to 25, wherein the identifier of the terminal device is configured to determine a time region corresponding to paging detection, and the second information is determined based on the time region.

27. The wireless communication method according to any one of claims 20 to 26, wherein the first communication device includes a positioning server, and the second communication device includes one or more of the terminal device, an access network device corresponding to a neighboring cell of the terminal device, and an access network device corresponding to a serving cell of the terminal device.

28. The wireless communication method according to any one of claims 20 to 27, wherein the first information includes one or more of following information:

    a candidate time window for sending the first signal;
    a candidate time window for measuring the first signal;
    a start time of the time window; and
    a duration of the time window.

29. The wireless communication method according to claim 28, wherein in a case where the first information is determined based on the second information and related to the start time, the start time is further determined based on a first offset, wherein the first offset is related to one or more of a DRX active period, a preconfigured processing window (PPW) parameter, and a paging cycle.

30. The wireless communication method according to claim 29, wherein in response to the time window being within the PPW, the first offset is a first value, and in response to the time window being outside the PPW, the first offset is a second value.

31. The wireless communication method according to claim 29, wherein a system frame number corresponding to the start time satisfies:

$$(SFN + PF\_offset + Pos\_offset) \bmod T = (T \operatorname{div} N) \times (UE\_ID \bmod N),$$

wherein SFN represents the system frame number, Pos_offset represents the first offset, T represents a cycle length of a DRX cycle of the terminal device, UE_ID represents an identifier of the terminal device, N represents a number of paging frames (PF) in the DRX cycle, Ns represents a number of paging occasions (PO) within one PF, and PF_offset represents a frame offset of the PF.

32. The wireless communication method according to claim 29, wherein a DRX activation time is a first time instance, and the start time precedes the first time instance by the first offset.

33. The wireless communication method according to any one of claims 29 to 32, wherein the first offset is preset or determined by the first communication device.

34. The wireless communication method according to any one of claims 29 to 33, wherein the first offset is greater than or equal to the duration of the time window.

35. The wireless communication method according to claim 34, wherein the first offset is less than or equal to a first duration threshold, wherein the first duration threshold is greater than the duration of the time window.

36. The wireless communication method according to any one of claims 20 to 35, wherein the first signal includes at least one of a positioning reference signal (PRS) and a sounding reference signal (SRS).

37. A communication device, wherein the communication device is a first communication device and comprises at least one of:

   a first determination unit, configured to determine second information based on first information; and
   a second determination unit, configured to determine first information based on second information;
   wherein the first information is related to at least one of a time window for sending a first signal and a time window for measuring a first signal, the second information is related to at least one of a discontinuous reception (DRX) parameter and a paging parameter of a terminal device, and the first signal is configured for positioning of the terminal device.

38. The communication device according to claim 37, wherein the communication device is further configured to:

   receive indication information sent by a second communication device, the indication information including at least one of first indication information and second indication information;
   wherein the first indication information is configured to indicate the first information in the case where the second information is determined based on the first information, and the first indication information is configured to indicate the second information in the case where the first information is determined based on the second information; and
   wherein the second indication information is configured to indicate a radio resource control (RRC) state of the terminal device.

39. The communication device according to claim 38, wherein the communication device is further configured to:

   send at least one of a first request and a second request;
   wherein the first request is configured to request acquisition of the first indication information, and the second request is configured to request acquisition of the second indication information.

40. The communication device according to claim 38 or 39, wherein the indication information is carried in one or more of following signalings:
   a location positioning protocol (LPP) signaling, and a new radio positioning protocol a (NRPPa) signaling.

41. The communication device according to any one of claims 38 to 40, wherein receiving the indication information sent by the second communication device includes:

receiving the indication information sent by the second communication device in response to an access network device or the first communication device receiving a positioning request from the terminal device; or receiving the indication information sent by the second communication device in response to completion of selection of a positioning server.

42. The communication device according to any one of claims 38 to 41, wherein the communication device is further configured to:
determine the second information based on the RRC state and an identifier of the terminal device.

43. The communication device according to claim 42, wherein determining the second information based on the RRC state and the identifier of the terminal device includes:

determining a time region corresponding to paging detection based on the identifier of the terminal device; and determining the second information based on the time region.

44. The communication device according to any one of claims 37 to 43, wherein in the case where the first information is determined based on the second information, the communication device is further configured to:
send the first information to the second communication device.

45. The communication device according to claim 44, wherein the first information is carried in a configuration reference message of the first signal or auxiliary information of the first signal.

46. The communication device according to any one of claims 38 to 45, wherein the first communication device includes a positioning server, and the second communication device includes one or more of the terminal device, an access network device corresponding to a neighboring cell of the terminal device, and an access network device corresponding to a serving cell of the terminal device.

47. The communication device according to any one of claims 37 to 46, wherein the first information includes one or more of following information:

a candidate time window for sending the first signal;
a candidate time window for measuring the first signal;
a start time of the time window; and
a duration of the time window.

48. The communication device according to claim 47, wherein in a case where the first information is determined based on the second information and related to the start time, the start time is further determined based on a first offset, wherein the first offset is related to one or more of a DRX active period, a preconfigured processing window (PPW) parameter, and a paging cycle.

49. The communication device according to claim 48, wherein in response to the time window being within the PPW, the first offset is a first value, and in response to the time window being outside the PPW, the first offset is a second value.

50. The communication device according to claim 48, wherein a system frame number corresponding to the start time satisfies:

$$(SFN + PF\_offset + Pos\_offset) \bmod T = (T \ div \ N) \times (UE\_ID \bmod N),$$

wherein SFN represents the system frame number, Pos_offset represents the first offset, T represents a cycle length of a DRX cycle of the terminal device, UE_ID represents an identifier of the terminal device, N represents a number of paging frames (PF) in the DRX cycle, Ns represents a number of paging occasions (PO) within one PF, and PF_offset represents a frame offset of the PF.

51. The communication device according to claim 48, wherein a DRX activation time is a first time instance, and the start time precedes the first time instance by the first offset.

52. The communication device according to any one of claims 48 to 51, wherein the first offset is preset or determined by the first communication device.

53. The communication device according to any one of claims 48 to 52, wherein the first offset is greater than or equal to the duration of the time window.

54. The communication device according to claim 53, wherein the first offset is less than or equal to a first duration threshold, wherein the first duration threshold is greater than the duration of the time window.

55. The communication device according to any one of claims 37 to 54, wherein the first signal includes at least one of a positioning reference signal (PRS) and a sounding reference signal (SRS).

56. A communication device, wherein the communication device is a second communication device and comprises:

a sending unit, configured to send indication information to a first communication device, the indication information including at least one of first indication information or second indication information; wherein when the first indication information indicates first information, the first information is configured to determine second information, or when the first indication information indicates second information, the second information is configured to determine the first information, wherein the first information is related to at least one of a time window for sending a first signal and a time window for measuring a first signal, the second information is related to at least one of a discontinuous reception (DRX) parameter and a paging parameter of a terminal device, the first signal is configured for positioning of the terminal device, the second indication information indicates a radio resource control (RRC) state of the terminal device, and when the first information is determined based on the second information, the RRC state and an identifier of the terminal device are configured to determine the second information.

57. The communication device according to claim 56, wherein the communication device is configured to:

receive at least one of a first request and a second request sent by the first communication device; wherein the first request is configured to request acquisition of the first indication information, and the second request is configured to request acquisition of the second indication information.

58. The communication device according to claim 56 or claim 57, wherein the first indication information is carried in one or more of following signalings:
a location positioning protocol (LPP) signaling, and a new radio positioning protocol a (NRPPa) signaling.

59. The communication device according to any one of claims 56 to 58, wherein sending the indication information to the first communication device includes:

sending the indication information to the first communication device in response to an access network device or the first communication device receiving a positioning request from the terminal device; or
sending the indication information to the first communication device in response to completion of selection of a positioning server.

60. The communication device according to any one of claims 56 to 59, wherein in the case where the first information is determined based on the second information, the communication device is further configured to:
receive the first information sent by the first communication device.

61. The communication device according to claim 60, wherein the first information is carried in a configuration reference message of the first signal or auxiliary information of the first signal.

62. The communication device according to any one of claims 56 to 61, wherein the identifier of the terminal device is configured to determine a time region corresponding to paging detection, and the second information is determined based on the time region.

63. The communication device according to any one of claims 56 to 62, wherein the first communication device includes a positioning server, and the second communication device includes one or more of the terminal device, an access network device corresponding to a neighboring cell of the terminal device, and an access network device corresponding to a serving cell of the terminal device.

64. The communication device according to any one of claims 56 to 63, wherein the first information includes one or more of following information:

a candidate time window for sending the first signal;
a candidate time window for measuring the first signal;
a start time of the time window; and
a duration of the time window.

65. The communication device according to claim 64, wherein in a case where the first information is determined based on the second information and related to the start time, the start time is further determined based on a first offset, wherein the first offset is related to one or more of a DRX active period, a preconfigured processing window (PPW) parameter, and a paging cycle.

66. The communication device according to claim 65, wherein in response to the time window being within the PPW, the first offset is a first value, and in response to the time window being outside the PPW, the first offset is a second value.

67. The communication device according to claim 65, wherein a system frame number corresponding to the start time satisfies:

$$(\text{SFN} + \text{PF\_offset} + \text{Pos\_offset}) \bmod T = (T \text{ div } N) \times (\text{UE\_ID} \bmod N),$$

wherein SFN represents the system frame number, Pos_offset represents the first offset, T represents a cycle length of a DRX cycle of the terminal device, UE_ID represents an identifier of the terminal device, N represents a number of paging frames (PF) in the DRX cycle, Ns represents a number of paging occasions (PO) within one PF, and PF_offset represents a frame offset of the PF.

68. The communication device according to claim 65, wherein a DRX activation time is a first time instance, and the start time precedes the first time instance by the first offset.

69. The communication device according to any one of claims 65 to 68, wherein the first offset is preset or determined by the first communication device.

70. The communication device according to any one of claims 65 to 69, wherein the first offset is greater than or equal to the duration of the time window.

71. The communication device according to claim 70, wherein the first offset is less than or equal to a first duration threshold, wherein the first duration threshold is greater than the duration of the time window.

72. The wireless communication method according to any one of claims 56 to 71, wherein the first signal includes at least one of a positioning reference signal (PRS) and a sounding reference signal (SRS).

73. A communication device, comprising: a memory and a processor, wherein the memory is configured to store a program, and the processor is configured to call the program stored in the memory to cause the communication device to perform the wireless communication method according to any one of claims 1 to 36.

74. An apparatus, comprising: a processor, configured to call a program stored in a memory to cause the apparatus to perform the wireless communication method according to any one of claims 1 to 36.

75. A chip, comprising: a processor, configured to call a program stored in a memory to cause a device equipped with the chip to perform the wireless communication method according to any one of claims 1 to 36.

76. A computer-readable storage medium storing a program causing a computer to perform the wireless communication method according to any one of claims 1 to 36.

77. A computer program product, comprising: a program causing a computer to perform the wireless communication method according to any one of claims 1 to 36.

78. A computer program causing a computer to perform the wireless communication method according to any one of claims 1 to 36.

100

110

120

120

FIG. 1

Terminal device can monitor PDCCH

On-duration

DRX cycle

FIG. 2

Represent a position of a PF within a DRX cycle

Represent a position of a PO within the PF

DRX cycle

... ...

FIG. 3

First
communication
device

Second
communication
device

S405 Indication information

S410 Determine second information based
on first information; and/or, determine first
information based on second information

**FIG. 4**

Terminal
device

Access network
device

AMF

LMF

S510/S520  LPP capability transfer (transmission of DRX and/or paging parameter )

S530 LPP assistance data delivery

S540/S550 LPP request location information

S560 Location
measurements

S570 Terminal device triggers a service request or a connection
resume

S580 LPP provide location information

LPP response time

**FIG. 5**

FIG. 6

Access network device corresponding to a serving cell | Access network device corresponding to a neighboring cell | LMF

TRP information request

TRP information request

S710

TRP information request

TRP information request

S720

S730a Assistance information control

S740a Assistance information control

**FIG. 7**

Terminal device | Access network device corresponding to a serving cell | Access network device corresponding to a neighboring cell | Positioning server

S810 TRP Information Exchange

S830 RRC Reconfiguration Message

S820 Measurement Pre-configuration Request

S840 RRC Reconfiguration Complete Message

S850 Measurement Pre-configuration Confirmation

S870 PPW Activation or Deactivation Command

S860 Measurement Activation

S880 First Signal Transmission Request

S882 First Signal Transmission Request

S890 First Signal Transmission Confirmation

S892 First Signal Transmission Confirmation

**FIG. 8**

Communication device 900

First determination unit 910

Second determination unit 920

**FIG. 9**

Communication 1000

Sending unit 1010

**FIG. 10**

Device 1100

Processor 1110

Memory 1120

Transceiver 1130

**FIG. 11**

## INTERNATIONAL SEARCH REPORT

| | International application No. |
|---|---|
| | **PCT/CN2023/106120** |

**A. CLASSIFICATION OF SUBJECT MATTER**

H04W 76/28(2018.01)i; H04W72/04(2023.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, 3GPP: 定位服务器, 测量, 定位, 时间窗, 周期, 时长, 非连续接收, 寻呼, 标识, 偏移, location, DRX, SRS, PRS, RRC, ID, time, cycle, paging, PO, offset, LMF, LMC, LLMF

**C. DOCUMENTS CONSIDERED TO BE RELEVANT**

| Category* | Citation of document, with indication, where appropriate, of the relevant passages | Relevant to claim No. |
|---|---|---|
| X | CN 115316020 A (QUECTEL WIRELESS SOLUTIONS CO., LTD.) 08 November 2022 (2022-11-08)<br>description, paragraphs 0004-0012, 0064-0066, 0093-0146, and 0279-0285, and claims 1-72 and 145-150 | 1-78 |
| X | CN 115299080 A (QUECTEL WIRELESS SOLUTIONS CO., LTD.) 04 November 2022 (2022-11-04)<br>description, paragraphs 0044-0095, and claims 1-50 | 1-78 |
| A | CN 113473596 A (HUAWEI TECHNOLOGIES CO., LTD.) 01 October 2021 (2021-10-01)<br>entire document | 1-78 |
| A | WO 2021120023 A1 (HUAWEI TECHNOLOGIES CO., LTD.) 24 June 2021 (2021-06-24)<br>entire document | 1-78 |
| A | WO 2021203443 A1 (HUAWEI TECHNOLOGIES CO., LTD.) 14 October 2021 (2021-10-14)<br>entire document | 1-78 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/106120**

| Patent document cited in search report | | | Publication date (day/month/year) | Patent family member(s) | | | Publication date (day/month/year) |
|---|---|---|---|---|---|---|---|
| CN | 115316020 | A | 08 November 2022 | WO | 2023122944 | A1 | 06 July 2023 |
| CN | 115299080 | A | 04 November 2022 | WO | 2023115466 | A1 | 29 June 2023 |
| CN | 113473596 | A | 01 October 2021 | WO | 2021197286 | A1 | 07 October 2021 |
| WO | 2021120023 | A1 | 24 June 2021 | CN | 114762402 | A | 15 July 2022 |
| WO | 2021203443 | A1 | 14 October 2021 | CN | 115104348 | A | 23 September 2022 |

Form PCT/ISA/210 (patent family annex) (July 2022)